# EUROPÄISCHE PATENTSCHRIFT

(11) **EP 2 461 872 B1**
(45) Veröffentlichungstag und Bekanntmachung des Hinweises auf die Patenterteilung: **11.09.2013**
(21) Anmeldenummer: 10730762.1
(22) Anmeldetag: 02.07.2010
(51) Int. Cl.: A62D 1/00, C09K 21/14

(54) **VERFAHREN ZUR BEKÄMPFUNG UND/ODER VORBEUGUNG EINES BRANDES VON LITHIUM-IONEN-ZELLEN UND LITHIUM-IONEN-POLYMER-ZELLEN**
METHOD FOR FIGHTING AND/OR PREVENTING FIRES IN LITHIUM ION CELLS AND LITHIUM ION POLYMER CELLS
PROCÉDÉ DE LUTTE CONTRE ET/OU DE PRÉVENTION D'UN INCENDIE DE CELLULES LITHIUM-ION ET DE CELLULES POLYMÈRE-LITHIUM-ION

(30) Priorität: 03.08.2009 DE 102009035908
(43) Veröffentlichungstag der Anmeldung: 13.06.2012
(73) Patentinhaber: Samsung SDI Co., Ltd., Gyeonggi-do (KR); Robert Bosch GmbH, 70442 Stuttgart (DE)
(72) Erfinder: WOEHRLE, Thomas, 70469 Stuttgart-Feuerbach (DE); DENNINGER, Werner, 70376 Stuttgart (DE); SCHMIDT, Dieter, 71254 Ditzingen (DE); KERN, Rainer, 70174 Stuttgart (DE)
(74) Vertreter: Bee, Joachim
(86) Internationale Anmeldenummer: PCT/EP2010/059437
(87) Internationale Veröffentlichungsnummer: WO 2011/015411

(56) Entgegenhaltungen:
- FR-A5- 2 078 186
- US-A1- 2008 176 141
- DATABASE WPI Week 200920 Thomson Scientific, London, GB; AN 2009-B48620 XP002600617 & CN 101 106 185 A (BEIJING ZHONGRUN HENGDONG BATTERY CO LTD) 16. Januar 2008 (2008-01-16)

## Beschreibung

### Stand der Technik

Lithium-Ionen-Zellen, spielen eine immer gößere Rolle in vielfältigen Einsatzbereichen. Bekannt und weit verbreitet sind Lithium-Ionen-Batterien für elektronische Geräte, wie z.B. Mobiltelefone, Labtops, Power Tools, tragbare MP3-Player etc. Lithium-Ionen-Batterien, deren Applikation im Automobilbereich liegt, werden in der nahen Zukunft ebenfalls eine große Rolle spielen. Mit Lithium-lonen-Polymer-Zellen sind Lithium-Ionen-Zellen gemeint, welche in AluminiumVerbundfolie verpackt sind. Im folgenden wird nur der Begriff "Lithium-Ionen" verwndet.

Beim Versagen von Batterien, insbesondere von Lithium-Ionen Batterien, können aus dem Batterieinneren chemische Stoffe und Partikel austreten. Dieses freigesetzte Material liegt dann als Partikel, Staub, Folie, Aerosol, Flüssigkeit,Tröpfchennebel und/oder gasförmig vor und ist am Austrittsort meist sehr heiß. Dieses Material ist teilweise sehr reaktiv und gesundheitsschädlich. Das freigesetzte Material kann an umliegenden Oberflächen kondensieren und kontaminiert damit den umgebenden Bereich. Das freigesetzte Material kann auch gesundheitsschädlich für Personen sein. Es ist auch möglich, dass sich das freigesetzte Material entzündet und es zu Brand- und/oder Explosionsereignissen kommt.

In praktisch allen Lithium-Ionen-Batterien wird Lithiumhexafluorophosphat (LiPF₆) als Leitsalz verwendet, welches bei einer Havarie der Batterie (z.B. bei einem thermal runaway) zu hochreaktiven und toxischen Verbindungen zersetzt werden kann. In der Literatur (siehe z.B. Hui Yang, Guorong V. Zhuang, Philip N. Ross Jr. "Thermal Stability of LiPF6 Salt and Li-ion Battery Electrolytes Containing LiPF6" Lawrence Berkeley National Laboratory (University of California, University of California) 2006 Paper LBNL-58758) werden als Zersetzungsprodukte bereits ab Temperaturen von ca. 110 °C die hochreaktiven Verbindungen PF₃ (Phosphortrifluorid), PF₅ (Phosphorpentafluorrid), HF (Hyfrogenfluorid), auch als Flußsäure bezeichnet) und POF₃ (Phosphoroxytrifluorid) genannt. Es können darüber hinaus auch weitere giftige und korrosive Phosphor/Sauerstoff/Fluor-Verbindungen entstehen. Daneben ist noch in Spuren mit fluororganischen Verbindungen zu rechnen.

Die thermische Zersetzung von LiPF₆ unter Ausschluss von Wasser verläuft ab Temperaturen von ca. 110°C nach folgender Reaktion:

LiPF₆ → LiF (s) + PF₅ (g)

, wobei s für fest und g für gasförmig steht.

In Anwesenheit von Wasser hydrolysiert das Lithiumhexafluorophosphat in folgender Weise:

LiPF₆ + 2 H₂O → LiOH (s) + POF₃ (g) + 3 HF (g)

Grundsätzlich sind zudem folgende Hydrolyse-Reaktionen zu beachten:

PF₅ + H₂O → POF₃ + 2 HF

POF₃ + 3 H₂O → H₃PO₄ + 3 HF

Das bedeutet, dass auch das intermediär entstehenden Phosphoroxitrifluorid durch Reaktion mit Wasser, z. B. in Form von Luftfeuchtigkeit, letztlich zu hochreaktivem Fluorwasserstoff (HF) hydrolysieren.

Im Regelfall wird beim Einsatz und Test von Batterien, insbesondere von Lithium-Ionen-Batterien, das Versagen der Batterien technisch unterbunden. Kommt es dennoch zu einem solchen Batterieversagen und zu einem Brand oder "Thermal Runaway", so sind Maßnahmen zur Brandbekämpfung und zur Vermeidung einer Kontamination der Umgebung erforderlich. Der Begriff "Thermal Runaway" bedeutet ein thermisches Durchgehen der Lithium-Ionen-Zelle, wobei durch übermäßige und sich selbst verstärkende Wärmeproduktion in der Zelle und/oder mangelhafte Wärmeabführung ein Öffnen der Zelle auftreten kann, wobei es zusätzlich zur Rauchentwicklung, Feuererscheinung oder einer Explosion kommen kann. Zum Thema "Thermal Runaway" von Lithium-Ionen-Zellen wird auf folgende Literaturstelle verwiesen: Kern, R.; Bindel R.; Uhlenbrock R.; Durchgängiges Sicherheitskonzept für die Prüfung von Lithium-lonen-Batteriesystemen; *ATZelektronik,* in Druck. Ferner wird in US 2008/176141 A1 eine flammhemmende Polymer-Elektrolyt-Zusammensetzung offenbart, die ein modifiziertes Maleinimid, ein Lithium-Salz und mindestens eine ionische Lösung umfasst. Die beschriebene Zusammensetzung dient als Flammschutzmittel in Lithiumbatterien.

Bislang ist kein Konzept zur Löschung bzw. Brandbekämpfung von Lithium-Ionen-Batterien bekannt, welches sowohl gute Löschergebnisse erzielt als auch gleichzeitig die Kontamination der Umgebung mit hochreaktiven Verbindungen aus der havarierten Zelle oder Batterie verhindert oder zumindest einschränkt.

### Offenbarung der Erfindung

Erfindungsgemäß wird ein Verfahren bereit gestellt zur Bekämpfung und/oder Vorbeugung eines Brandes einer oder mehrerer Batteriezellen, bevorzugt von Lithium-lonen-Zellen. Das erfindungsgemäße Verfahren zeichnet sich dadurch aus, dass eine wässrige Lösung eines Kalzium(Ca)-Salzes und ein Gel-Löschmittel angewendet werden.

Es hat sich überraschenderweise gezeigt, dass der Einsatz einer wässrigen Lösung eines Kalzium-Salzes, insbesondere einer 20%-igen CaCl₂-Lösung, in Verbindung mit dem zeitgleichen Einsatz eines Gel-Löschmittels mit guten Kühleigenschaften zu einer guten Löschwirkung und gleichzeitig zu einer überraschend starke Verminderung der Freisetzung von reaktiven Verbindungen aus havarierten Lithium-Ionen-Zellen führt; zudem zeigte sich durch die Kühlwirkung der Gel-Komponente eine Veringerung von einer Übergreifung der Hitze bzw. den Flammen von einer Lithium-Ionen-Zelle auf eine benachbarte. Das Kalzium-Ion aus der wässrigen Lösung eines Kalzium-Salzes kann Fluorid-Ionen und Flußsäure (HF) und Fluorid-enthaltende Spezies wie Phosphoroxytrifluorid (POF₃) binden, insbesondere in Form von Kalziumfluorid (CaF₂), welches nahezu wasserunlöslich ist und somit ausfällt. Damit können freigesetzte Fluorid-lonen und Hydrogenfluorid (HF) sowie auch Spezies wie POF₃ sicher und weitgehenst in eine ungefährliche Form überführt werden.

Das erfindungsgemäße Verfahren eignet sich zur Bekämpfung und/oder Vorbeugung eines Brandes einer oder mehrerer Batteriezellen, insbesondere von Lithium-lonen-Zellen, -Modulen, -Batterien oder -Akkumulatoren. Unter dem Begriff "Batterie" werden hier elektrochemische Energiespeicher verstanden, insbesondere Batterien oder Akkumulatoren aller gebräuchlichen Akkumulatortechnologien. Bevorzugt sind die Zellen, Module, Batterien oder Akkumulatoren vom Typ Li-Ionen (Lithium-Ionen-), LiPo (als Lithium-Polymer oder Lithium-Ionen-Polymer bezeichnet). Die folgenden Begriffe reflektieren Beispiele für Aktivmaterialien, die in diesen Lithium-Ionen-Zellen zum Einsatz kommen: Li₂Mn₂O₄ (LMO) als Lithiummanganspinell bezeichnet; LiFePO₄ (LFP)- Lithium-Eisen-Phosphat, Li₄Ti₅O₁₂ (LiTiO) - Lithium-Titanat.

Das erfindungsgemässe Löschmittel kann für alle Lithium-Ionen-Zellen mit allen Aktivmaterialien angewendet werden.

Der Begriff "Batterie" wird dabei sowohl für einzelne Zellen, als auch für Module aus mehreren Zellen, als auch für komplexere Architekturen umfassend mehrere Zellen und/oder Module verwendet.

Bevorzugt werden hochkapazitive Batterien eingesetzt mit einer nominalen Kapazität von mindestens 3Ah. Dabei können sich die angegebenen nominalen Kapazitätswerte entweder auf die ganze intakte Batterie beziehen oder auf eine einzelne Zelle einer Batterie.

Bevorzugt handelt es sich bei den Batterien teilweise oder ausschliesslich um Lithium-lonen- und/oder Lithium-Ionen-Polymer-Zellen, -Module und/oder - Batterien mit einer nominalen Kapazität von mindestens 3Ah pro Zelle.

Unter der Bekämpfung eines Brandes einer oder mehrerer Batteriezellen wird sowohl das Löschen eines Brandes, als auch die Hemmung eines Brandes oder einer Temperaturzunahme oder die Verhinderung oder Hemmung einer Ausbreitung des Brandes auf weitere Teile der Batteriezelle, der Batterie und/oder der Umwelt verstanden sowie die Verhinderung und/oder Hemmung der Bildung, Verbreitung und/oder Freisetzung von giftigen und/oder reaktiven Inhaltsstoffen der Batterie oder Batteriezelle oder Produkten von solchen Inhaltsstoffen und Umweltstoffen.

Unter Vorbeugung werden Massnahmen verstanden, die vor dem Eintritt eines Brandereignisses vorgenommen werden und die dazu führen können, dass ein Brand einer oder mehrerer Batteriezellen gar nicht erst entsteht oder lediglich mit verminderter Intensität abläuft. Beispielsweise können Betteriezellen in undefiniertem Zustand vorsorglich mit einer wässrigen Lösung eines Kalzium-Salzes und einem Gel-Löschmittel behandelt werden, bevor diese transportiert und/oder gelagert werden, um die Gefahr eines Batteriebrandes zu vermindern.

Das erfindungsgemäße Verfahren ist dadurch gekennzeichnet, dass eine wässrige Lösung eines Ca-Salzes angewendet wird. Bei dem Ca-Salz handelt es sich um ein Salz bei dem Ca in der Oxidationsstufe 2+ vorliegt. Das Salz der wässrigen Lösung kann ein organisches Salz enthalten oder daraus bestehen, bevorzugt ein Salz aus Ca²⁺ und einem niedrigen Alkyl oder Carbonsäure, z.B. einem C1 bis C4 Alkyl oder Carbonsäure. Das Salz der wässrigen Lösung kann bevorzugt ein anorganisches Ca-Salz enthalten oder daraus bestehen. Besonders bevorzugt sind CaCl₂ oder Ca(OH)₂ oder eine Mischung daraus. Ganz besonders bevorzugt ist eine wässrige CaCl₂-Lösung.

In der wässrigen Lösung liegt das Ca-Salz in einer Konzentration vor, die es erlaubt, dass Ca-Ionen der wässrigen Lösung Fluorid-Ionen, die aus der havarierten Batteriezelle stammen, zu CaF₂ binden. Dabei übersteigt der Gehalt an Ca-Salz nicht eine Konzentration bei der eine Sättigung der wässrigen Lösung mit Ca-Salz eintritt. Bevorzugt liegt das Ca-Salz in einer Konzentration in der wässrigen Lösung vor von mindestens 1 % w/v (weight per volume, also Gewicht pro Volumen) bis einschließlich einer Konzentration, bei der sich eine gesättigte Lösung einstellt, besonders bevorzugt von 5% w/v bis einschließlich 40% w/v, besonders bevorzugt von 10% w/v bis 30% w/v, ganz besonders bevorzugt von 20% w/v.

In der wässrigen Lösung liegt das Ca-Salz in einem wässrigen Lösungsmittel gelöst vor. Bei dem wässrigen Lösungsmittel handelt es sich bevorzugt um Wasser oder um Lösungsmittelgemische mit einem Wasseranteil von mehr als 20%, bevorzugt von mehr als 50%. Es können aber auch andere Lösungsmittel oder Lösungsmittelgemische verwendet werden.Das Lösungsmittel ist bei Raumtemperatur flüssig und das verwendete Ca-Salz ist bis zur gewünschten Konzentration im Lösungsmittel vollständig löslich. Das Lösungsmittel selbst zeichnet sich weiterhin dadurch aus, dass es selbst nicht brennbar ist und gegenüber dem Ca-Salz inert ist.

Im erfindungsgemäßen Verfahren wird neben der wässrigen Lösung eines Ca-Salzes auch ein Gel-Löschmittel angewendet. Das Gel-Löschmittel umfasst ein wasserabsorbierendes Polymer und kann durch Wassereinlagerung ein sogenanntes Hydrogel bilden. Bevorzugt liegt das wasserabsorbierende Polymer im-Gel-Löschmittel in einer Konzentration von 0,5 bis 10% (w/v) vor, besonders bevorzugt von 1,5 bis 3% (w/v). Das Gel-Löschmittel zeichnet sich dadurch aus, dass es Wasser aufnehmen und binden kann und nach erfolgter Anwendung auf dem zu löschenden Objekt dafür sorgt, dass das Wasser vom Brandherd nicht sofort wegfließen kann. Die Verwendung eines solchen Gel-Löschmittels führt nicht nur dazu, dass der Wasserverbrauch gesenkt und eine erhöhte Kühlleistung erreicht wird, sondern es führt auch noch dazu, dass die Freisetzung von reaktiven Stoffen aus dem Inneren der Batterie oder der Batteriezelle vermindert oder sogar verhindert werden kann. Die Kontamination der Umwelt mit solchen gefährlichen Stoffen oder Verbindungen wird somit vermindert. Solche Gel-Löschmittel sind dem Fachmann bekannt. Die Herstellung, Verwendung und Zusammensetzung einer Auswahl an geeigneter Gel-Löschmittel sind beispielhaft beschrieben in US 3,229,769, US 5,849,210 und WO 2006/056379. Beispiele bekannter und für den Einsatz im erfindungsgemäßen Verfahren geeigneter Gel-Löschmittel sind die kommerziell erhältlichen Produkte:

### 1. Hydrex®

Das Produkt wird von der Fa. Öko-Tec vertrieben.

Das Löschmittel Hydrex® ist ebenso wie Firesorb® und Prevento® ein Gel-Löschmittel, welches in pulverförmiger Konsistenz vorliegt und erst im Einsatzfall gemischt wird. Hydrex® war das erste Gel-Löschmittel auf dem Markt.

Hydrex® ist ein als Pulver vorliegender Löschmittelzusatz. Die Zumischung von 1 % in eine 10 l fassende Kübelspritze ergibt innerhalb kurzer Zeit eine gelartige Flüssigkeit mit sehr guter Fähigkeit, Brandhitze zu absorbieren. Die chemische Basis von Hydrex® sind Gel-Bildner auf Basis von wasserabsorbierenden Polymeren.

### 2. Prevento®:

Prevento® ist ein neuartiges Löschmittel des Herstellers BASF (siehe WO 2006/056379).

Die Prevento®-Zubereitung umfasst:
1,0 Gew.-% wasserabsorbierendes Polymer
1,1 Gew.-% Trikaliumzitrat
0,2 Gew.-% Xanthan (Quellmittel)
0,12 Gew.-% Polyethylenglykol (Lösungsvermittler)
0,2 Gew.% Biozid (Stabilisator für die Haltbarkeit vorgemischter Lösungen) und Wasser

### 3. Firesorb®:

Das Produkt wird von der Fa. Evonik, vormals Degussa-Stockhausen, vertrieben.

Die Zubereitung umfasst Natriumacrylat/Acrylamid-Copolymer und Fettsäureester als W/O-Emulsion. Als Lösungsvermittler wird Isotridecyl-polyglykolether oder Polyglykolether verwendet. Zur Stabilisierung der vorgemischten Lösung für eine Haltbarkeit von zwei Jahren im Feuerlöschgerät wird ein Biozid zugemischt.

Bevorzugt werden die wässrige Lösung eines Ca-Salzes und das Gel-Löschmittel gleichzweitig angewendet. Unter gleichzeitig wird dabei eine Anwendung verstanden, bei der zumindest über einen messbaren Zeitraum sowohl die wässrige Lösung eines Ca-Salzes als auch das Gel-Löschmittel eingesetzt werden. Dabei ist es unerheblich, ob eines der beiden Löschmittel insgesamt über einen längeren oder einen kürzeren Zeitraum angewendet wird als das jeweils andere Löschmittel, vorausgesetzt es ergibt sich ein messbarer Zeitraum zu dem beide Löschmittel gleichzeitig eingesetzt werden.

Die wässrige Lösung eines Ca-Salzes und das Gel-Löschmittel können auch in Form eines gemeinsamen, integrierten Löschmittels angewendet werden. Dazu können sowohl alle oder Teile der festen Bestandteile des Gel-Löschmittels als auch alle oder Teile der Salzbestandteile der wässrigen Lösung zunächst in fester Form, z.B. als Pulver vorliegen und erst bei Einsatz des Löschmittels mit Wasser oder Lösungsmittel vermischt werden.

Die beiden Löschmittel können im erfindungsgemäßen Verfahren beispielsweise direkt auf das zu behandelnde Objekt appliziert werden oder über dem zu behandelnden Objekt angewendet werden oder in der Umgebung um das zu behandelnde Objekt angewendet werden. Bevorzugt wird die wässrige Lösung eines Ca-Salzes in fein verteilter Form angewendet, besonders bevorzugt als Sprühnebel, ganz besonders bevorzugt als Sprühnebel mit einem mittleren Tropfendurchmesser von 0,0003 mm bis 0,01 mm, bevorzugt mit einem mittleren Tropfendurchmesser von 0,001 mm bis 0,005 mm. Solche Sprühnebel lassen sich insbesondere unter Nutzung einer Feinsprühtechnologie erreichen. Ein Vorteil der Feinsprühtechnologie ist in der sehr großen Oberfläche des versprühten Mediums zu sehen, die zur effektiven Rauchgasbindung besonders günstig ist. Die große Oberfläche des versprühten Mediums wird durch die sehr kleinen Tropfen-Durchmesser 0,001 mm - 0,005 mm und einen Sprühdruck von 60 bar bis 100 bar erreicht. Tropfen dieses Durchmessers weisen ein gasförmiges Schwebeverhalten auf. Die feinsten Wassertropfen der Hochdruck-Wassernebel-Technologie haben gegenüber dem Tropfen-Spektrum der Wasser-Sprühanlagen, die im Druckbereich zwischen 5 bar und 15 bar betrieben werden, den Vorteil des Vermögens zur größeren Hitzeabsorption durch die große Oberfläche, durch die auch die Absorption der entstehenden Schadgase besser beherrscht wird. Als Nebeneffekt, der für die Entsorgung des kontaminierten Löschwassers von Vorteil ist, wirkt sich die geringe Löschmittel-Einsatzmenge aus.

Die vorliegende Erfindung bezieht sich auch auf eine Löschanordnung zur Ausführung des erfindungsgemäßen Verfahrens. Unter einer Löschanordnung wird die funktionale und räumliche Anordnung von Löschgeräten verstanden, so dass ein Brand einer oder mehrerer Batteriezellen in einem zu schützenden Objekt oder in einem zu schützenden Raum belämpft werden kann oder einem solchen Brand vorgebeugt werden kann. Dazu umfasst die Löschanordnung mindestens zwei unterschiedliche Löschgeräte, wobei ein erstes Löschgerät derart ausgeführt ist, dass mit diesem Löschgerät eine wässrige Lösung eines Ca-Salzes anwendbar ist, und ein zweites Löschgerät derart ausgeführt ist, dass mit diesem Löschgerät ein Gel-Löschmittel anwendbar ist.

Eines, mehrere oder alle Löschgeräte der erfindungsgemäßen Löschanordnung können als mobile Löschgeräte ausgebildet sein, bevorzugt als tragbare Löschgeräte, z.B. in Form herkömmlicher Feuerlöscher, die entweder mit einer wässrigen Lösung eines Ca-Salzes oder mit einem Gel-Löschmittel versehen sind.

Eines, mehrere oder alle Löschgeräte der erfindungsgemäßen Löschanordnung können als stationäre Löschgeräte ausgebildet sein. Bevorzugt können dazu eines, mehrere oder alle Löschgeräte als Löschmittelleitungen mit einer oder mehreren Öffnungen, Düsen, Sprinklern und/oder anderen Vorrichtungen zur Anwendung der wässrigen Lösung eines Ca-Salzes und/oder des Gel-Löschmittels ausgebildet sein. In einer bevorzugten Ausführungsform ist mindestens ein Löschgerät zur Anwendung der wässrigen Lösung eines Ca-Salzes als Hochdruckringleitung mit einer oder mehreren Öffnungen, Düsen oder Sprinklern ausgebildet, so dass ein Sprühnebel erzeugbar ist mit einem mittleren Tropfendurchmesser von 0,0003 mm bis 0,01 mm, bevorzugt mit einem mittleren Tropfendurchmesser von 0,001 mm bis 0,005 mm. Dazu kann die Hochdruckringleitung derart ausgebildet sein, dass sie einen Sprühdruck von 60 bar bis 100 bar erreicht. Bei der Auslegung der Einsatzmenge an Lösung eines Ca-Salzes, die über Hochdruck-Wassernebel verteilt wird, ist ein Löschmittelbedarf von 6 l/m³ x min für eine Einsatzzeit von 10 Minuten vorzusehen, die von der Einsatzzeit der Werksfeuerwehr bestimmt wird. Vom VdS wird zusätzlich eine Einsatzreserve von 100 % gefordert.

Auch das Gel-Löschmittel, z.B. FIRESORB® in Form einer 2%-igen vorgemischten Lösung, kann mittels einem Löschgerät in Form einer Hochdruckringleitung, z.B. unter einem Halte-Druck von 10 bar bereitgestellt werden. Die Haltbarkeit der Lösung kann z.B. durch die Zugabe von Bioziden für einen längeren Zeitraum gewährleistet sein. In einem zur Hochdruckringleitung gehörigen Vorrats-Druck-Behälter, z.B. mit einem Druckgas-Polster von 0,75 m³, wird das Gel-Löschmittel, z.B. eine 2%-ige FIRESORB® - Lösung vorgehalten, die über eine Rohrleitung mit Multifunktionsdüse im Einsatzfall angewendet werden kann.

Eines, mehrere oder alle Löschgeräte der erfindungsgemäßen Löschanordnung können manuell auslösbar sein, z.B. über eine Druckknopf-Schnellauslösung. Alternativ oder zusätzlich können diese Löschgeräte auch automatisch auslösbar sein mittels Steuer- und/oder Regelungsmitteln, z.B. angesteuert über eine oder mehrere PLC-Steuerungen (PLC steht für programmable logic controller). Dabei können diese Steuer- und/oder Regelungsmittel z.B. mit Sensoren oder Detektoren verbunden sein, die den Zustand einer oder mehrerer Batteriezellen überwachen können, so dass bei Erkennung des Eintritts eines Brandereignisses automatisch die Löschanordnung ausgelöst werden kann.

Die Erfindung bezieht sich auch auf eine Vorrichtung zum sicheren Lagern, Transportieren und/oder Testen von Batteriezellen, bevorzugt von Lithium-Ionen-Zellen. Die Vorrichtung weist einen Innenraum auf, zur Aufnahme von einer oder mehreren Batteriezellen. Der Innenraum kann teilweise oder ganz von der Umgebung getrennt vorliegen, z.B. durch eine oder mehrere Wände, Böden, Decken und/oder Türen. Bei einer solchen erfindungsgemäßen Vorrichtung kann es sich beispielsweise um einen geschlossenen oder offenen Transportbehälter, einen geschlossenen oder offenen Lagerbehälter und/oder einen Prüfstand für eine oder mehrere Batteriezellen, -Module oder -Architekturen handeln. Die Vorrichtung zum sicheren lagern, transportieren und/oder testen von Batteriezellen weist mindestens eine erfindungsgemäße Löschanordnung auf. Dabei kann es sich um eine Löschanordnung mit mobilen und/oder stationären Löschgeräten handeln. Zusätzlich kann die Vorrichtung einen oder mehrere Sensoren oder Detektoren zur Zustandsüberwachung einer oder mehrerer Batteriezellen aufweisen, bevorzugt ist der Sensor oder Detektor ausgewählt aus UV/IR-Sensoren, Drucksensoren, Rauchmeldern, Gassensoren und/oder Temperatursensoren. Die erfindungsgemäße Vorrichtung kann zusätzlich Steuer- und/oder Regelungsmittel aufweisen, z.B. PLC-Steuerungen, zur automatischen Auslösung der Löschanordnung. Desweiteren kann die erfindungsgemäße Vorrichtung eine oder mehrer Absauganordnungen aufweisen, die derart ausgeführt sind, dass Gase aus dem Innenraum zur Aufnahme von einer oder mehreren Batteriezellen absaugbar sind, bevorzugt ist die Absauganordnung über eine Berstscheibe vom Inneren der Vorrichtung getrennt.

Die vorliegende Erfindung bezieht sich auch auf die Verwendung einer wässrigen Lösung eines Ca-Salzes und eines Gel-Löschmittels zur Bekämpfung und/oder Vorbeugung eines Brandes einer oder mehrerer Batteriezellen, bevorzugt einer oder mehrerer Lithium-Ionen-Zellen.

Im folgenden wird die Erfindung anhand von Ausführungsbeispielen exemplarisch erläutert.

Es wurden vergleichende Löschversuche mit unterschiedlichen Löschmitteln durchgeführt. Die Löschversuche wurden manuell, also nicht automatisch oder über Löschanlagen, durchgeführt.

Hierfür wurden teilweise tragbare Feuerlöscher, 6 l Inhalt mit Multifunktionsbrause Typ, Total Walther ISOGARD, verwendet und entsprechend mit Löschmittel gefüllt.

Als Löschmittel wurden folgende Löschmittel eingesetzt:
A) eine wässrige 20%-ige CaCl₂-Lösung, (6 l Feuerlöscher mit Brause)
B) Firesorb®, 2%-ige Mischung ,(6 l Feuerlöscher mit Brause)
C) Wasser, (6 l Feuerlöscher mit Brause)
D) Kohlendioxid, herkömmlicher 5 kg Löscher

Die Versuche wurden mit handelsüblichen und frei am Markt erhältlichen Lithium-Ionen Zellen der korean. Firma Kokam durchgeführt. Es handelt sich präziser ausgedrückt um sogenannte Lithium-Ionen-Polymer-Zellen, die auch als Pouch-Zellen oder Softpacks bezeichnet werden (Verpackungsmaterial besteht aus Aluminiumverbundfolie). Laut Datenblatt des koreanischen Zellherstellers Kokam besteht das aktive Kathodenmaterial besteht aus einem Blend von Lithium-Nickel-Cobalt-Mangan-Oxid (LiNiCoMnO₂) und Lithium-Cobalt-Oxid (LiCoO₂). Als Leitsalz wird bei dieser Kokam-Zelle LiPF₆ verwendet. Die nominale Kapazität der Zellen beträgt 4 Ah,. Es wurden sechs Li-lon-Module, bestehend aus je zehn Pouch-Zellen (4 Ah KOKAM), nacheinander durch Überladung jeweils einer Zelle der Modulen in den ,thermal runaway' getrieben (Ausgangsspannung 4,2 V, Ladestrom 8 A). Dadurch gerieten alle betreffenden Module in Brand und wurden mit verschiedenen Löschmitteln gelöscht. Im Folgenden werden die Versuchsreihen mit V1 bis V4 bezeichnet. Während der Versuche wurden die von den Modulen abtropfenden Löschmittel (kein Löscherfolg mit CO₂, abschließende Löschung mit einem Wasserlöscher) in einer Kunststoffwanne aufgefangen und die Proben auf Anionen und Kationen quantitativ untersucht.

Die eingesetzten Löschmittel sind folgenden Versuchsbezeichnungen zugeordnet:
- V1:: C, Wasserlöscher
- V2:: Zwei Löscher gleichzeitig: A und B, Firesorb® in Wasser (Gel-Löschmittel) und CaCl₂ in Wasser; Überladung einer äußeren Zelle des Moduls
- V3:: Zwei Löscher gleichzeitig: A und B, Firesorb® in Wasser (Gel) und CaCl₂ in Wasser; Überladung einer zentralen Zelle des Moduls
- V4:: D, CO₂-Löscher; anschließend Wasserlöscher C

### Kationenbestimmung:

Die Löschwasserproben wurden filtriert und Mittels ICP-AES die Elemente Kalzium, Kobalt, Lithium, Mangan und Nickel quantitativ bestimmt. Die Ergebnisse sind in Tabelle 1 dargestellt.

**Tabelle 1: Kationenkonzentrationen der Löschwasserproben V1 bis V4**

| **Probe** | **Ca [ppm]** | **Co [ppm]** | **Li [ppm]** | **Mn [ppm]** | **Ni [ppm]** |
|---|---|---|---|---|---|
| **V1** | 39,74 ± 0,31 | 83,07 ± 0,28 | 95,43 ± 1,08 | < 3,29 | 5,56 ± 0,19 |
| **V2** | 29630 ± 1,05 | 97,88 ± 0,54 | 78,49 ± 0,44 | < 3,29 | 25,34 ± 0,65 |
| **V3** | 21960 ± 0,47 | 508,7 ± 0,13 | 173,9 ± 1,19 | < 3,29 | 29,60 ± 0,37 |
| **V4** | 40,61 ± 5,94 | 222,4 ± 3,19 | 83,19 ± 2,25 | < 3,29 | 28,90 ± 3,88 |

### Anionenbestimmung:

Die Löschwasserproben wurden filtriert und Mittels Ionenchromatographie die Anionen Fluorid, Chlorid und Phosphat bestimmt. Die Ergebnisse sind in Tabelle 2 dargestellt. NWG steht für die Nachweisgrenze des angewendeten Messverfahrens:
NWG für Fluorid: 0.2 ppm
NWG für Phosphat: 2.0 ppm

Die Proben V1, und V4 wurden 1:10 verdünnt vermessen. Für den Chloridnachweis der Proben V2 und V3 mussten die Proben 1:1000 verdünnt werden. Für den Phosphatnachweis wurden alle Proben zusätzlich unverdünnt eingespritzt. Zusätzlich wurden für den Fluoridnachweis die Proben V2 und V3 unverdünnt verwendet.

**Tabelle 2: Anionenkonzentration der Löschwasserproben V1 bis V4**

| **Probe** | **Fluorid [ppm]** | **Chlorid [ppm]** | **Phosphat [ppm]** |
|---|---|---|---|
| **V1** | 35,5 | 60,3 | unter NWG |
| **V2** | unter NWG | 51766,0 | unter NWG |
| **V3** | unter NWG | 39493,0 | unter NWG |
| **V4** | 152,3 | 70,8 | unter NWG |

### Fazit der Versuche:

Die Kokam - Zellen, die nach Flammenerscheinung mit einer zeitlichen Verzögerung von 10 Sekunden mit dem Löschmitteln beaufschlagt wurden zeigten erstens, dass die CaCl₂-Lösung den entstehenden Rauch niederschlug und zweitens, dass das Gel-Löschmittel Firesorb® die Hitze derart absorbierte, dass die Flammen nicht auf die andere Lithium-Ionen-Zellen überschlugen.

Kohlendioxid ist als Löschmittel absolut ungeeignet. Dies resultiert aus der Tatsache, dass die Flammen immer wieder aufloderten.

Wasser appliziert als Sprühstrahl löscht ebenfalls. Der entstehende Rauch wird niedergeschlagen. Nach Beendigung der Aufbringung des Löschmittels ist ein erneutes wiederaufflammen sichtbar. Die analytischen Ergebnisse zu V1 zeigen jedoch die Anwesenheit von Fluorid-Ionen im Löschwasser.

Die gemeinsame Anwendung einer wässrigen CaCl₂-Lösung und eines Gel-Löschmittels (hier Firesorb®) führte zu einer überraschend äussert starken Reduktion an im Löschwasser gelösten Fluorid-Ionen. Durch den Einsatz dieser beiden Löschmittel kann die Menge an freigesetzten reaktiven Fluor-entaltenden Spezies wie POF₃ und Flußsäure, die in die Umwelt gelangen können, deutlich verringert werden.

## Patentansprüche

1. Verfahren zur Bekämpfung und/oder Vorbeugung eines Brandes einer oder mehrerer Batteriezellen, bevorzugt von Lithium-Ionen-Zellen, **dadurch gekennzeichnet, dass** eine wässrige Lösung eines Kalzium-Salzes und ein Gel-Löschmittel angewendet werden.

2. Verfahren nach Anspruch 1, **dadurch gekennzeichnet, dass** die wässrige Lösung eines Kalzium-Salzes und das Gel-Löschmittel gleichzeitig angewendet werden.

3. Verfahren nach einem der vorhergehenden Ansprüche, daduch gekennzeichnet, dass die wässrige Lösung eines Kalzium-Salzes und das Gel-Löschmittel in Form eines gemeinsamen, integrierten Löschmittels angewendet werden.

4. Verfahren nach einem der vorhergehenden Ansprüche, daduch gekennzeichnet, dass das Kalzium-Salz der wässrigen Lösung ein anorganisches Kalzium-Salz enthält oder daraus besteht, bevorzugt CaCl₂, oder Ca(OH)₂ oder einer Mischung daraus.

5. Verfahren nach einem der vorhergehenden Ansprüche, daduch gekennzeichnet, dass das Kalzium-Salz in einer Konzentration in der wässrigen Lösung vorliegt von mindestens 1% w/v bis einschließlich einer gesättigten Lösung, bevorzugt von 5% w/v bis einschließlich 40% w/v, besonders bevorzugt von 10% w/v bis 30% w/v, ganz besonders bevorzugt von 20% w/v.

6. Verfahren nach einem der vorhergehenden Ansprüche, daduch gekennzeichnet, dass das Gel-Löschmittel ein wasserabsorbierendes Polymer umfasst.

7. Verfahren nach einem der vorhergehenden Ansprüche, daduch gekennzeichnet, dass die wässrige Lösung eines Kalzium-Salzes in fein verteilter Form angewendet wird, bevorzugt als Sprühnebel, besonders bevorzugt als Sprühnebel mit einem mittleren Tropfendurchmesser von 0,0003 mm bis 0,01 mm, ganz besonders bevorzugt mit einem mittleren Tropfendurchmesser von 0,001 mm bis 0,005 mm.

8. Verwendung einer wässrigen Lösung eines Kalzium-Salzes und eines Gel-Löschmittels zur Bekämpfung und/oder Vorbeugung eines Brandes einer oder mehrerer Batteriezellen, bevorzugt einer Lithium-Ionen-Zelle.

9. Löschanordnung zur Ausführung eines Verfahrens nach einem der Ansprüche 1 bis 7, **dadurch gekennzeichnet, dass** die Löschanordnung mindestens zwei unterschiedliche Löschgeräte aufweist, wobei ein erstes Löschgerät derart ausgeführt ist, dass mit diesem Löschgerät eine wässrige Lösung eines Kalzium-Salzes anwendbar ist, und ein zweites Löschgerät derart ausgeführt ist, dass mit diesem Löschgerät ein Gel-Löschmittel anwendbar ist.

10. Löschanordnung nach Anspruch 9, **dadurch gekennzeichnet, dass** das erste, das zweite oder beide Löschgeräte als mobile Löschgeräte ausgebildet sind, bevorzugt als tragbare Löschgeräte.

11. Löschanordnung nach Anspruch 9, **dadurch gekennzeichnet, dass** das erste, das zweite oder beide Löschgerate als stationäre Löschgeräte ausgebildet sind, bevorzugt als Löschmittelleitungen mit einer oder mehreren Öffnungen, Düsen, Sprinklern und/oder anderen Vorrichtungen zur Anwendung der wässrigen Lösung eines Ca-Salzes und/oder des Gel-Löschmittels.

12. Löschanordnung nach einem der Ansprüche 9 bis 11, **dadurch gekennzeichnet, dass** das erste Löschgerät derart ausgeführt ist, dass mit diesem Löschgerät eine wässrige Lösung eines Kalzium-Salzes als Sprühnebel anwendbar ist.

13. Vorrichtung zum sicheren Lagern, Transport und/oder Testen von Batteriezellen, bevorzugt von Lithium-Ionen-Zellen, umfassend einen Innenraum zur Aufnahme von einer oder mehreren Batteriezellen, **dadurch gekennzeichnet, dass** die Vorrichtung eine Löschanordnung nach einem der Ansprüche 9 bis 12 aufweist.

14. Vorrichtung nach Anspruch 13, **dadurch gekennzeichnet, dass** die Vorrichtung zusätzlich einen oder mehrere Sensoren zur Zustandsüberwachung einer oder mehrerer Batteriezellen aufweist, bevorzugt ist der Sensor ausgewählt aus UV/IR-Sensoren, Drucksensoren, Rauchmeldern, Gassensoren und/oder Temperatursensoren.

15. Vorrichtung nach einem der Ansprüche 13 bis 14, **dadurch gekennzeichnet, dass** die Vorrichtung zusätzlich eine Absauganordnung aufweist, die derart ausgeführt ist, dass Gase aus dem Innenraum zur Aufnahme von einer oder mehreren Batteriezellen absaugbar sind, bevorzugt ist die Absauganordnung über eine Berstscheibe vom Inneren der Vorrichtung getrennt.

## Claims

1. Method for controlling and/or preventing a fire in one or more battery cells, preferably lithium ion cells, **characterized in that** an aqueous solution of a calcium salt and a gel extinguishant are applied.

2. Method according to Claim 1, **characterized in that** the aqueous solution of a calcium salt and the gel extinguishant are applied simultaneously.

3. Method according to either of the preceding claims, **characterized in that** the aqueous solution of a calcium salt and the gel extinguishant are applied in the form of a joint, integrated extinguishant.

4. Method according to any of the preceding claims, **characterized in that** the calcium salt of the aqueous solution comprises or consists of an inorganic calcium salt, preferably CaCl₂, or Ca(OH)₂ or a mixture thereof.

5. Method according to any of the preceding claims, **characterized in that** the calcium salt is present in a concentration in the aqueous solution of at least 1% w/v up to and including a saturated solution, preferably of 5% w/v up to and including 40% w/v, more preferably of 10% w/v to 30% w/v, very preferably of 20% w/v.

6. Method according to any of the preceding claims, **characterized in that** the gel extinguishant comprises a water-absorbing polymer.

7. Method according to any of the preceding claims, **characterized in that** the aqueous solution of a calcium salt is applied in finely divided form, preferably as spray mist, more preferably as spray mist having an average droplet diameter of 0.0003 mm to 0.01 mm, very preferably having an average droplet diameter of 0.001 mm to 0.005 mm.

8. Use of an aqueous solution of a calcium salt and a gel extinguishant for controlling and/or preventing a fire in one or more battery cells, preferably a lithium ion cell.

9. Extinguishing system for implementing a method according to any of Claims 1 to 7, **characterized in that** the extinguishing system has at least two different extinguishers, a first extinguisher being designed such that with this extinguisher, an aqueous solution of a calcium salt can be applied, and a second extinguisher being designed such that with this extinguisher a gel extinguishant can be applied.

10. Extinguishing system according to Claim 9, **characterized in that** the first, the second or both extinguishers are designed as mobile extinguishers, preferably as portable extinguishers.

11. Extinguishing system according to Claim 9, **characterized in that** the first, the second or both extinguishers are designed as stationary extinguishers, preferably as extinguishant lines having one or more openings, nozzles, sprinklers and/or other devices for the application of the aqueous solution of a Ca salt and/or of the gel extinguishant.

12. Extinguishing system according to any of Claims 9 to 11, **characterized in that** the first extinguisher is designed such that with this extinguisher an aqueous solution of a calcium salt can be applied as a spray mist.

13. Apparatus for the safe storage, transport and/or testing of battery cells, preferably of lithium ion cells, comprising an interior compartment for accommodating one or more battery cells, **characterized in that** the apparatus has an extinguishing system according to any of Claims 9 to 12.

14. Apparatus according to Claim 13, **characterized in that** the apparatus additionally has one or more sensors for monitoring the status of one or more battery cells, the sensor being preferably selected from UV/IR sensors, pressure sensors, smoke alarms, gas sensors and/or temperature sensors.

15. Apparatus according to either of Claims 13 and 14, **characterized in that** the apparatus additionally has a suction withdrawal system designed such that gases can be drawn off under suction from the interior compartment for accommodating one or more battery cells; the suction withdrawal system is preferably separated by a bursting disk from the interior of the apparatus.

## Revendications

1. Procédé de lutte contre et/ou de prévention d'un incendie d'une ou de plusieurs cellules de batterie, de préférence de cellules lithium-ion, **caractérisé en ce que** l'on utilise une solution aqueuse d'un sel de calcium et un agent d'extinction en gel.

2. Procédé selon la revendication 1, **caractérisé en ce que** l'on utilise simultanément la solution aqueuse d'un sel de calcium et l'agent d'extinction en gel.

3. Procédé selon l'une quelconque des revendications précédentes, **caractérisé en ce que** l'on utilise la solution aqueuse d'un sel de calcium et l'agent d'extinction en gel sous la forme d'un agent d'extinction intégré commun.

4. Procédé selon l'une quelconque des revendications précédentes, **caractérisé en ce que** le sel de calcium de la solution aqueuse contient un sel de calcium inorganique ou en est composé, de préférence du CaCl₂ ou du Ca(OH)₂ ou un mélange de ceux-ci.

5. Procédé selon l'une quelconque des revendications précédentes, **caractérisé en ce que** le sel de calcium est présent dans la solution aqueuse en une concentration d'au moins 1 % en poids/volume jusqu'à et y compris une solution saturée, de préférence de 5 % en poids/volume à 40% en poids/volume, de préférence encore de 10 % en poids/volume à 30 % en poids/volume, et de préférence particulièrement de 20 % en poids/volume.

6. Procédé selon l'une quelconque des revendications précédentes, **caractérisé en ce que** l'agent d'extinction en gel comprend un polymère absorbant l'eau.

7. Procédé selon l'une quelconque des revendications précédentes, **caractérisé en ce que** l'on utilise la solution aqueuse d'un sel de calcium sous forme finement dispersée, de préférence sous la forme d'un nuage de pulvérisation, de préférence encore sous la forme d'un nuage de pulvérisation avec un diamètre moyen des gouttelettes de 0,0003 mm à 0,01 mm, et de préférence particulièrement avec un diamètre moyen des gouttelettes de 0,001 mm à 0,005 mm.

8. Utilisation d'une solution aqueuse d'un sel de calcium et d'un agent d'extinction en gel pour lutter contre et/ou prévenir un incendie d'une ou de plusieurs cellules de batterie, de préférence d'une cellule lithium-ion.

9. Dispositif d'extinction pour la mise en oeuvre d'un procédé selon l'une quelconque des revendications 1 à 7, **caractérisé en ce que** le dispositif d'extinction présente au moins deux appareils d'extinction différents, dans lequel un premier appareil d'extinction est réalisé de telle manière qu'une solution aqueuse d'un sel de calcium puisse être utilisée avec cet appareil d'extinction, et un deuxième appareil d'extinction est réalisé de telle manière qu'un agent d'extinction en gel puisse être utilisé avec cet appareil d'extinction.

10. Dispositif d'extinction selon la revendication 9, **caractérisé en ce que** le premier, le deuxième ou les deux appareils d'extinction est/sont conçus comme des appareils d'extinction mobiles, de préférence des appareils d'extinction portables.

11. Dispositif d'extinction selon la revendication 9, **caractérisé en ce que** le premier, le deuxième ou les deux appareils d'extinction est/sont conçus comme des appareils d'extinction stationnaires, de préférence comme des conduites d'agent d'extinction avec un ou plusieurs orifices, gicleurs, arroseurs et/ou autres dispositifs pour l'utilisation de la solution aqueuse d'un sel de Ca et/ou de l'agent d'extinction en gel.

12. Dispositif d'extinction selon l'une quelconque des revendications 9 à 11, **caractérisé en ce que** le premier appareil d'extinction est réalisé de telle manière qu'une solution aqueuse d'un sel de calcium puisse être utilisée sous la forme d'un nuage de pulvérisation avec cet appareil d'extinction.

13. Dispositif pour le stockage, le transport et/ou l'essai en sécurité de cellules de batterie, de préférence de cellules lithium-ion, comprenant un espace intérieur destiné à recevoir une ou plusieurs cellules de batterie, **caractérisé en ce que** le dispositif comporte un dispositif d'extinction selon l'une quelconque des revendications 9 à 12.

14. Dispositif selon la revendication 13, **caractérisé en ce que** le dispositif comporte en plus un ou plusieurs détecteurs pour la surveillance de l'état d'une ou de plusieurs cellules de batterie, le détecteur étant de préférence choisi parmi les détecteurs UV/IR, les capteurs de pression, les détecteurs de fumée, les détecteurs de gaz et/ou les capteurs de température.

15. Dispositif selon l'une quelconque des revendications 13 à 14, **caractérisé en ce que** le dispositif comporte en plus un dispositif d'aspiration, qui est réalisé de telle manière que des gaz puissent être aspirés hors de l'espace intérieur destiné à recevoir une ou plusieurs cellules de batterie, le dispositif d'aspiration étant de préférence séparé de l'intérieur du dispositif par un disque claquant.
